# EUROPÄISCHE PATENTANMELDUNG

(11) **EP 1 683 567 A2**
(43) Veröffentlichungstag der Anmeldung: **26.07.2006**
(21) Anmeldenummer: 06000944.6
(22) Anmeldetag: 17.01.2006
(51) Int. Cl.: B01J 8/04, B01D 53/04

(54) **Reaktor mit einer ringförmigen adsorptiv aktiven Schüttung und einer ringförmigen Inert-Schüttung**

(30) Priorität: 21.01.2005 DE 102005002975
(71) Anmelder: Linde Aktiengesellschaft, 65189 Wiesbaden (DE)
(72) Erfinder: Grahl, Matthias, Dr., 80639 München (DE)
(74) Vertreter: Zahn, Christoph

(57) **Zusammenfassung**

Es wird ein Reaktor für chemische Reaktionen und/oder adsorptive Trennverfahren beschrieben,
a) aufweisend einen Mantel (1),
b) aufweisend zwei im Wesentlichen ringförmige Schüttungen (6, 6', 7, 7', 7"),
c) wobei eine Schüttung (6, 6') aus einem chemisch und/oder adsorptiv aktivem Material (Aktiv-Schüttung) und eine Schüttung (7, 7', 7") aus einem im Hinblick auf die in dem Reaktor zu realisierende chemische Reaktion inerten Material (Inert-Schüttung) besteht,
d) wobei die Schüttungen (6, 6', 7, 7', 7") mittels eines gas- und/oder flüssigkeitsdurchlässigen Korbes voneinander getrennt sind,
e) aufweisend einen Gaszuführ- bzw. Gasabführbereich (4) zwischen dem Mantel (1) und der Aktiv-Schüttung (6, 6') und
f) aufweisend einen Gaszuführ- bzw. Gasabführbereich in Form eines Kernrohres (2, 2').

Erfindungsgemäß füllt die Inert-Schüttung (7, 7', 7") den zwischen dem Kernrohr (2, 2') und der Aktiv-Schüttung (6, 6') verbleibenden Raum zumindest teilweise aus.

## Beschreibung

Die Erfindung betrifft einen Reaktor für chemische Reaktionen und/oder adsorptive Trennverfahren,
a) aufweisend einen Mantel,
b) aufweisend zwei im Wesentlichen ringförmige Schüttungen,
c) wobei eine Schüttung aus einem chemisch und/oder adsorptiv aktivem Material (Aktiv-Schüttung) und eine Schüttung aus einem im Hinblick auf die in dem Reaktor zu realisierende chemische Reaktion inerten Material (Inert-Schüttung) besteht,
d) wobei die Schüttungen mittels eines gas- und/oder flüssigkeitsdurchlässigen Korbes voneinander getrennt sind,
e) aufweisend einen Gaszuführ- bzw. Gasabführbereich zwischen dem Mantel und der Aktiv-Schüttung und
f) aufweisend einen Gaszuführ- bzw. Gasabführbereich in Form eines Kernrohres.

Unter dem Begriff "Aktiv-Schüttung" sei jede Art von Schüttung zu verstehen, die aus einem oder mehreren unterschiedlichen Materialien gebildet ist, wobei das bzw. die Materialien im Hinblick auf das über sie bzw. durch sie geleitete Medium - sei es gasförmig oder flüssig - chemisch und/oder adsorptiv aktiv reagieren.

Unter dem Begriff "Inert-Schüttung" sei jede Art von Schüttung zu verstehen, die aus einem oder mehreren unterschiedlichen Materialien gebildet ist, wobei das bzw. die Materialien im Hinblick auf das über sie bzw. durch sie geleitete Medium - sei es gasförmig oder flüssig - weder chemisch noch adsorptiv reagieren.

Aus der europäischen Patentanmeldung 0 759 320 ist ein gattungsgemäßer Reaktor für chemische Reaktionen, der insbesondere für adsorptive Trennverfahren Anwendung findet, bekannt.

Für gattungsgemäße Reaktoren besteht ein weiter Anwendungsbereich. Sie können für die verschiedensten Reaktionen zwischen einem Gas oder einer Flüssigkeit und einem aktiven Material eingesetzt werden. Das aktive Material kann bspw. ein Adsorbens oder ein Katalysator sein.

Während der Reaktionsphase wird ein Reaktionsgas durch die aus dem aktiven Material bestehende Schüttung geführt, in dem es bspw. dem Raum zwischen Reaktormantel und äußeren Korb zugeleitet und von dem Raum innerhalb des inneren Korbes wieder abgezogen wird. Selbstverständlich kann die Strömungsrichtung auch umgekehrt verlaufen; in diesem Falle wird das Reaktionsgas zunächst dem Raum innerhalb des inneren Korbes zugeführt, gelangt nach Durchgang durch die Schüttung in den Raum zwischen Reaktormantel und äußeren Korb und wird aus diesem Raum abgezogen.

Im Falle einer Verwendung eines derartigen Reaktors für ein adsorptives Trennverfahren ist zu berücksichtigen, dass die Adsorptionsfähigkeit des aktiven Materials, also des Adsorbens, mit zunehmender Beladungsdauer abnimmt. Daher ist das Adsorbens in regelmäßigen Zeitabständen zu regenerieren. Hierbei wird während der Regenerierphase der Druck abgesenkt und/oder ein Regeneriergas, das gegenüber dem zu reinigenden Reaktions- bzw. Einsatzgas eine andere chemische Zusammensetzung und/oder einen anderen thermodynamischen Zustand aufweist, durch die Schüttung aus aktivem Material geleitet.

Bei gattungsgemäßen Reaktoren endet der gas- und/oder flüssigkeitsdurchlässige Bereich des inneren sowie des äußeren Korbes bereits unterhalb der Oberkante der Schüttung. Gleiches gilt für horizontal durchströmte Schüttungen. Die Beschickung des Reaktors mit dem aktiven Material erfolgt im Regelfall über ein im oberen Bereich des Reaktors angeordnetes Mannloch. Im Regelfall reicht die Schüttung bis in dieses Mannloch hinein.

Gattungsgemäße Reaktoren bzw. Adsorber erfordern besondere Maßnahmen, um eine gleichmäßige Anströmung der horizontal - ggf. in ständig wechselnder Richtung - durchströmten Schüttung zu erreichen, da die Schüttung selbst relativ wenig Druckabfall erzeugt und während einzelner Verfahrensschritte sehr hohe Geschwindigkeiten - bis zu 100 m/s - auftreten können. Um ein gleichmäßiges Anströmen der Schüttung zu erreichen, wird in der europäischen Patentanmeldung 0 870 538 ein Reaktor radialer Bauart vorgeschlagen, der eine Ablenkanordnung in Form einer zylindrischen Ablenkplatte aufweist. Die Ablenkanordnung kann hierbei entweder zwischen der äußeren Umhüllung und der Schüttung oder zwischen der Schüttung und der zentralen Rotationsachse vorgesehen werden.

In der vorgenannten europäischen Patentanmeldung 0 759 320 wird zur Vergleichmäßigung der Anströmung ein freies Volumen auf mindestens einer vertikalen Seite der Schüttung vorgeschlagen; dieses freie Volumen ist durch eine Wand in ein erstes Untervolumen in der Nähe der Schüttung und ein zweites Untervolumen unterteilt. Zusätzlich wird im Inneren der Schüttung eine Schicht aus getrenntem Material, bspw. Aluminiumkugeln, vorgeschlagen.

Eine schlechte bzw. nicht gleichmäßige Verteilung des der Aktiv-Schüttung zugeführten Mediums führt bei adsorptiven Verfahren zu einem frühzeitigen Durchbruch einer oder mehrerer unerwünschter Komponenten in bestimmten Bereichen der Schüttung und damit zu einer Verunreinigung des Produktstromes.

Besonders kritisch ist dies bei Vakuumdruckwechseladsorptionsverfahren, bei denen oftmals sehr hohe Strömungsgeschwindigkeiten auftreten. Da sich bei derartigen Prozessen die Strömungsrichtung in schneller Folge umkehrt, ist in beiden Strömungsrichtungen eine Gleichverteilung - also gleichmäßige Anströmung der Aktiv-Schüttung und ein gleichmäßiges Ausströmen aus der Aktiv-Schüttung - über einen großen Geschwindigkeitsbereich erforderlich.

Die Lösung dieses Problems mittels verhältnismäßig komplizierter Behältereinbauten, wie sie bspw. in der europäischen Patentanmeldung 0 870 538 vorgeschlagen werden, verteuert jedoch den Reaktor erheblich. Die in der europäischen Patentanmeldung 0 759 320 offenbarte Reaktorkontruktion vermeidet zwar diesen Nachteil, es hat sich jedoch gezeigt, dass mit dieser Lösung ein gleichmäßiges An- und Ausströmen nicht immer gewährleistet werden kann. Dies gilt insbesondere dann, wenn die axiale Symmetrie des Reaktors bzw. Adsorbers durch Fertigungstoleranzen, Inhomogenitäten der Schüttdichte oder auch die konstruktive Gestaltung des Kopfbereiches gestört ist. In solchen Fällen kann es in dem der Schüttung zugewandten Teil des inneren Gasvolumens zu unerwünschten vertikalen Geschwindigkeitskomponenten kommen, die eine gleichmäßige Nutzung der gesamten Schüttung verhindern.

Aufgabe der vorliegenden Erfindung ist es, einen gattungsgemäßen Reaktor anzugeben, der die vorgenannten Nachteile vermeidet.

Zur Lösung dieser Aufgabe wird ein gattungsgemäßer Reaktor vorgeschlagen, der dadurch gekennzeichnet ist, dass die Inert-Schüttung den zwischen dem Kernrohr und der Aktiv-Schüttung verbleibenden Raum zumindest teilweise ausfüllt.

Erfindungsgemäß wird also nunmehr in dem Bereich zwischen dem inneren freien Gasvolumen und der aktiven Schüttung eine diesen Bereich zumindest teilweise ausfüllende Schicht aus inertem Material angeordnet.

Es hat sich gezeigt, dass mit der erfindungsgemäßen Reaktorkonstruktion auch bei hohen Strömungsgeschwindigkeiten und schnell wechselnden Strömungsrichtungen eine ausreichend gute Gleichverteilung erreicht werden kann.

Weitere Ausgestaltungen des erfindungsgemäßen Reaktors sind dadurch gekennzeichnet, dass
- sich die Inert-Schüttung über wenigstens 10 % der Höhe des inneren Eintritts- bzw. Austrittsbereiches der Aktiv-Schüttung, vorzugsweise über die gesamte Höhe des inneren Eintritts- bzw. Austrittsbereiches der Aktiv-Schüttung erstreckt,
- die Inert-Schüttung aus metallischen und/oder keramischen Füllkörpern, vorzugsweise aus Pall- und/oder Raschigringen, gebildet ist,
- wobei die Pall- und/oder Raschigringe vorzugsweise einen Durchmesser zwischen 10 und 50 mm aufweisen,
- die Schichtdicke der Inert-Schüttung zwischen 5 und 50 %, vorzugsweise zwischen 10 und 20 % der Schichtdicke der Aktiv-Schüttung beträgt,
- die die Schüttungen trennende gas- und/oder flüssigkeitsdurchlässige Wand ein Lochblech ist,
- keine gas- und/oder flüssigkeitsdurchlässige Trennwand zwischen der Aktivund der Inert-Schüttung vorgesehen ist und
- zusätzlich zu der zwischen dem Kernrohr und der Aktiv-Schüttung angeordneten Inert-Schüttung eine weitere, die Aktiv-Schüttung umgebenden Inert-Schüttung angeordnet ist.

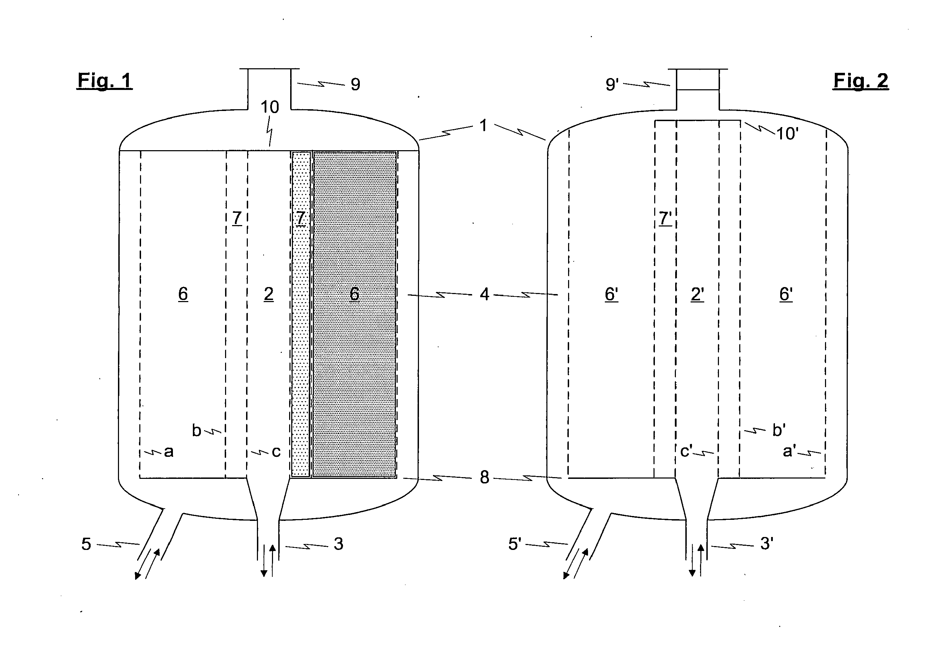

Der erfindungsgemäße Reaktor sowie weitere Ausgestaltungen desselben seien nachfolgend anhand der in den Figuren 1, 2 und 3 dargestellten Ausführungsbeispiele näher erläutert.

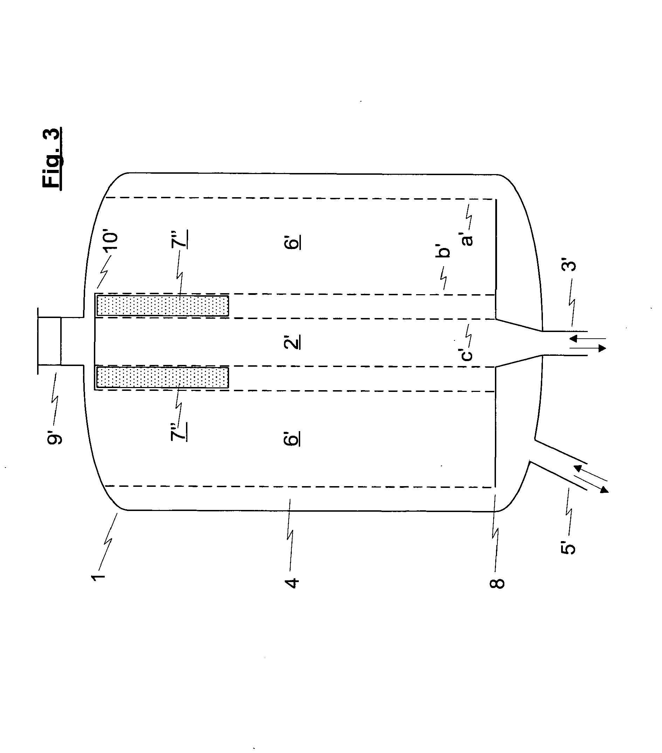

Hierbei zeigen die Figuren 1, 2 und 3 jeweils eine seitliche Schnittdarstellung durch mögliche Ausführungsformen des erfindungsgemäßen Reaktors 1, wobei sich die in der Figur 2 dargestellte Variante von der in der Figur 1 dargestellten Variante dadurch unterscheidet, dass sich die Aktiv-Schüttung 6' bis in den Kopfbereich des Reaktors 1 hinein erstreckt, wodurch die radiale Symmetrie der Schüttung gestört ist. Die in der Figur 3 dargestellte Ausführungsformen des erfindungsgemäßen Reaktors 1 zeichnet sich dadurch aus, dass die Inert-Schüttung 7" lediglich im Kopfbereich des Reaktors 1 angeordnet ist.

Es sei betont, dass die Darstellungen der Einfachheit halber lediglich schematisch ausgeführt sind; insbesondere entsprechen die Verhältnisse zwischen den äußeren Abmessungen der Reaktoren 1 und den Materialdicken nicht den wirklichen Maßen.

Die erfindungsgemäßen Reaktoren 1 und 1' weisen jeweils eine chemisch aktive Schüttung 6/6' - nachfolgend nurmehr als Aktiv-Schüttung bezeichnet - sowie eine chemisch inaktive Schüttung 7/7'/7" - nachfolgend nurmehr als Inert-Schüttung bezeichnet - auf; beide werden von dem zu behandelnden gasförmigen oder flüssigen Medium im Wesentlichen horizontal durchströmt. Dazu wird beispielsweise über die Gaszuführ- bzw. -abführleitung 3 das Medium dem inneren Kernrohr 2/2' zugeführt. Nach horizontalem Durchtritt durch die Schüttungen 7/7'/7" und 6/6' wird das Medium über den Außenraum 4 und die Gaszuführ- bzw. -abführleitung 5/5' aus dem Reaktor 1 abgezogen. Wird nunmehr die Strömungsrichtung umgekehrt, so tritt das Medium über die vorbeschriebene Leitung 5/5' sowie den Außenspalt bzw. -raum 4 in die Schüttung 6/6' und 7/7'/7" ein und wird anschließend über das Kernrohr 2/2' und die Leitung 3/3' aus dem erfindungsgemäßen Reaktor 1 abgezogen. Die vorbeschriebenen Strömungsführungen sind mittels der in den Leitung 3/3' sowie 5/5' gezeichneten Pfeile schematisiert dargestellt.

Das Kernrohr 2/2' wird gemäß dem Stand der Technik so ausgeführt, dass eine erste grobe Verteilung des Gasstroms über die Länge des Rohres gewährleistet ist. Dazu darf die freie Fläche der seitlichen Öffnungen nicht zu groß sein. Allgemein ist es üblich, die freie Fläche so zu dimensionieren, dass das Verhältnis zwischen freier Fläche und Rohrquerschnitt nicht größer als 1 ist.

Die Aktiv-Schüttung 6/6' wird jeweils durch einen äußeren a/a' und einen inneren gasund/oder flüssigkeitsdurchlässigen Korb b/b' sowie an ihrer Unterseite durch einen Boden 8 begrenzt. In den Figuren ist die obere Fixierung 10 der ersten 6/6' sowie der zweiten Schüttung 7/7'/7" lediglich in schematisierter Form dargestellt. In der Praxis werden dem Fachmann bekannte Mittel zum Komprimieren der Schüttung en 6/6' und 7/7'/7" vorgesehen; diese sind beispielsweise als eine Membran und/oder als ein mit Gas befüllbarer Ballon ausgebildet. Derartige Mittel zum Kom primieren von Schüttungen sind erforderlich, um die durch Abrieb verursachte, unerwünschte Staubbildung zu unterdrücken und die Schüttungen 6/6' und 7/7'/7" selbst zu verdichten. Des Weiteren dienen derartige Mittel zum Komprimieren von Schüttungen dazu, mögliche Ausbildungen unerwünschter Bypass-Strömungen im Kopfbereich von Schüttungen wirkungsvoll zu verhindern.

Wie bereits erwähnt, unterscheiden sich die in den Figuren 1 und 2 bzw. 3 dargestellten Ausführungsformen des erfindungsgemäßen Reaktors dadurch, dass im Falle der Figuren 2 und 3 die Aktiv-Schüttung 6' bis in den Kopfbereich des Reaktors 1, genauer bis in das im Regelfall vorzusehende Mannloch 9' hineinreicht. In den Figuren 2 und 3 nicht dargestellt ist eine ggf. vorzusehende Fixierung der Schüttungsoberfläche, beispielsweise mittels geeigneter flexibler und komprimierbarer Matten oder aufblasbarer Ballons.

Die Inert-Schüttung 7/7'/7" besteht aus einem im Hinblick auf die in dem Reaktor zu realisierende chemische und/oder adsorptive Reaktion inerten Material.

Sie erstreckt sich bei den in den Figuren 1 und 2 dargestellten Ausführungsformen des erfindungsgemäßen Reaktors 1 über die gesamte Höhe des inneren Eintritts- bzw. Austrittsbereiches der Aktiv-Schüttung 6/6'. Von dieser wird sie durch eine gasund/oder flüssigkeitsdurchlässige Wand b/b' getrennt. Bei der in der Figur 3 dargestellten Ausführungsform des erfindungsgemäßen Reaktors 1 hingegen erstreckt sich die Inert-Schüttung 7" lediglich etwa über das oberste Drittel des inneren Eintritts- bzw. Austrittsbereiches der Aktiv-Schüttung 6'. Denkbar sind eine Vielzahl weiterer Ausführungsformen des erfindungsgemäßen Reaktors 1, bei denen im Hinblick auf die Höhe der Inert-Schüttung 7" unterschiedliche Varianten gewählt werden.

Die in der Figur 3 dargestellte Ausführungsform des erfindungsgemäßen Reaktors 1 hat den Vorteil, dass mit ihr die durch die asymmetrische Gestaltung des Kopfbereiches hervorgerufenen Fehlverteilungen gezielt minimiert werden können.

Da die Inert-Schüttung 7/7'/7" - im Gegensatz zu dem bekannten Stand der Technik - nunmehr unmittelbar an die Aktiv-Schüttung 6/6' sowie das Kernrohr 2/2' angrenzt, wird eine hochwirksame Gleichverteilung in beiden Strömungsrichtungen erzielt. Im Falle der Strömungsrichtung "innen nach außen" wird eine nach Austritt aus dem Kernrohr 2/2' verbliebene Fehlverteilung wirksam kompensiert, insbesondere werden unerwünschte vertikale Geschwindigkeitskomponenten minimiert. Bei umgekehrter Strömungsrichtung wird das Ausströmen aus der Schüttung vergleichmäßigt; so können beispielsweise durch eine inhomogene Schüttungsdichte hervorgerufene Fehlverteilungen abgeschwächt und lokale Durchbrüche unerwünschter Komponenten minimiert werden.

Es sei nochmals betont, dass weitere Einbauten bzw. Maßnahmen innerhalb des Kernrohres 2/2' und/oder des Außenspaltes 4, wie sie vom Stand der Technik vorgeschlagen werden, nicht erforderlich sind.

Die gestellte Aufgabe - Vergleichmäßigung der Anströmung der (ersten) Schüttung - kann somit ohne komplizierte sowie aufwendig und damit teuer zu fertigende Reaktoreinbauten bzw. Maßnahmen realisiert werden. Auch sind die für die Inert-Schüttung verwendeten Materialien vergleichsweise kostengünstig.

Vorzugsweise besteht die Inert-Schüttung 7/7'/7" aus metallischen und/oder keramischen Füllkörpern, wobei insbesondere Pall- und/oder Raschigringe zur Anwendung kommen; hierbei weisen die verwendeten Pall- und/oder Raschigringe vorzugsweise einen Durchmesser zwischen 10 und 50 mm auf.

Den erfindungsgemäßen Reaktor weiterbildend wird vorgeschlagen, dass die Schichtdicke der Inert-Schüttung 7/7'/7" zwischen 5 und 50 %, vorzugsweise zwischen 10 und 20 % der Schichtdicke der Aktiv-Schüttung 6/6' beträgt.

Die in den Figuren 1, 2 und 3 dargestellten gas- und/oder flüssigkeitsdurchlässigen Wände a, a', b, b', c und c' werden vorzugsweise durch Lochbleche gebildet.

Denkbar ist ferner, dass entsprechend einer weiteren vorteilhaften Ausgestaltung des erfindungsgemäßen Reaktors, zwischen der Aktiv- 6/6' und der Inert-Schüttung 7/7'/7" keine gas- und/oder flüssigkeitsdurchlässige Trennwand - wie sie in den Figuren dargestellt ist - vorgesehen wird. Dies ist jedoch nur dann möglich, wenn während des Befüllens des erfindungsgemäßen Reaktors geeignete Vorkehrungen zum separaten Einfüllen beider Schüttungen getroffen werden, beispielsweise in Form eines flexiblen Ringes, der mit steigender Schüttungsoberflächen nach oben gezogen wird. Außerdem müssen die Materialien für die Aktiv- und Inert-Schüttung so gewählt sein, dass sie sich während des Betriebes nicht durchmischen können.

Entsprechend einer weiteren, in den Figuren nicht dargestellten Ausgestaltung des erfindungsgemäßen Reaktors kann zusätzlich zu der zwischen dem Kernrohr 2/2' und der Aktiv-Schüttung 6/6' angeordneten Inert-Schüttung 7/7'/7" eine weitere, die Aktiv-Schüttung 6/6' außen umgebenden Inert-Schüttung angeordnet sein.

Diese Ausgestaltung des erfindungsgemäßen Reaktors hat den Vorteil, dass auch auf der Außenseite eine Verbesserung der Gasverteilung erreicht werden kann.

Die erfindungsgemäße Reaktorkonstruktion eignet sich, wie bereits erwähnt, für adsorptive Trennverfahren. Insbesondere eignen sie sich für die adsorptive Abtrennung von Stickstoff aus einem Stickstoff enthaltenden Gasgemisch, insbesondere aus Luft, oder für die adsorptive Abtrennung von Kohlendioxid aus einem Kohlendioxid enthaltenden Gasgemisch, beispielsweise aus einem Reduktionsabgas.

Prinzipiell sind die erfindungsgemäßen Reaktoren für jede beliebige adsorptive Abtrennung einer oder mehrerer Komponenten aus einem mehrkomponentigen (Gas)Gemisch bzw. für die Auftrennung eines mehrkomponentigen (Gas)Gemisches vorteilhaft einsetzbar.

## Patentansprüche

1. Reaktor für chemische Reaktionen und/oder adsorptive Trennverfahren,
a) aufweisend einen Mantel (1),
b) aufweisend zwei im Wesentlichen ringförmige Schüttungen (6, 6', 7, 7', 7"),
c) wobei eine Schüttung (6, 6') aus einem chemisch und/oder adsorptiv aktivem Material (Aktiv-Schüttung) und eine Schüttung (7, 7', 7") aus einem im Hinblick auf die in dem Reaktor zu realisierende chemische Reaktion inerten Material (Inert-Schüttung) besteht,
d) wobei die Schüttungen (6, 6', 7, 7', 7") mittels eines gas- und/oder flüssigkeitsdurchlässigen Korbes voneinander getrennt sind,
e) aufweisend einen Gaszuführ- bzw. Gasabführbereich (4) zwischen dem Mantel (1) und der Aktiv-Schüttung (6, 6') und
f) aufweisend einen Gaszuführ- bzw. Gasabführbereich in Form eines Kernrohres (2, 2'),
**dadurch gekennzeichnet, dass** die Inert-Schüttung (7, 7', 7") den zwischen dem Kernrohr (2, 2') und der Aktiv-Schüttung (6, 6') verbleibenden Raum zumindest teilweise ausfüllt.

2. Reaktor nach Anspruch 1, **dadurch gekennzeichnet, dass** sich die Inert-Schüttung (7, 7', 7") über wenigstens 10 % der Höhe des inneren Eintritts- bzw. Austrittsbereiches der Aktiv-Schüttung (6, 6'), vorzugsweise über die gesamte Höhe des inneren Eintritts- bzw. Austrittsbereiches der Aktiv-Schüttung (6, 6') erstreckt.

3. Reaktor nach Anspruch 1 oder 2, **dadurch gekennzeichnet, dass** die Inert-Schüttung (7, 7', 7") aus metallischen und/oder keramischen Füllkörpern, vorzugsweise aus Pall- und/oder Raschigringen, gebildet ist.

4. Reaktor nach Anspruch 3, **dadurch gekennzeichnet, dass** die Pall- und/oder Raschigringe einen Durchmesser zwischen 10 und 50 mm aufweisen.

5. Reaktor nach einem der vorhergehenden Ansprüche 1 bis 4, **dadurch gekennzeichnet, dass** die Schichtdicke der Inert-Schüttung (7, 7', 7") zwischen 5 und 50 %, vorzugsweise zwischen 10 und 20 % der Schichtdicke der Aktiv-Schüttung (6, 6') beträgt.

6. Reaktor nach einem der vorhergehenden Ansprüche 1 bis 5, **dadurch gekennzeichnet, dass** die gas- und/oder flüssigkeitsdurchlässige Wand (c, c') ein Lochblech ist.

7. Reaktor nach einem der vorhergehenden Ansprüche 1 bis 6, **dadurch gekennzeichnet, dass** keine gas- und/oder flüssigkeitsdurchlässige Trennwand zwischen der Aktiv- (6, 6') und der Inert-Schüttung (7, 7', 7") vorgesehen ist.

8. Reaktor nach einem der vorhergehenden Ansprüche 1 bis 7, **dadurch gekennzeichnet, dass** zusätzlich zu der zwischen dem Kernrohr (2, 2') und der Aktiv-Schüttung (6, 6') angeordneten Inert-Schüttung (7, 7', 7") eine weitere, die Aktiv-Schüttung (6, 6') umgebenden Inert-Schüttung angeordnet ist.
